# EUROPÄISCHE PATENTANMELDUNG

(11) **EP 1 153 644 A1**
(43) Veröffentlichungstag der Anmeldung: **14.11.2001**
(21) Anmeldenummer: 00810398.8
(22) Anmeldetag: 10.05.2000
(51) Int. Cl.: B01D 50/00, B01D 47/06, B01D 53/74

(54) **Vorrichtung zum Reinigen gasförmiger Medien**

(71) Anmelder: Voigt, Andreas, 81735 München (DE)
(72) Erfinder: Voigt, Andreas, 81735 München (DE)
(74) Vertreter: Münch, Otto, Dipl.-Ing.

(57) **Zusammenfassung**

Das gasförmige Medium durchströmt einen Kanal (1), in welchem mindestens eine Zerstäuberdüse (2) für Frischwasser angeordnet ist. Am stromabwärtigen Ende des Kanals (1) sind Tropfenabscheider (6, 7) angeordnet. In der Druckwasser-Zuleitung (15) ist ein physikalisches Wasserbehandlungsgerät (16) angeordnet, dass mindestens eine Einrichtung zur Erzeugung von Wirbeln im durchfliessenden Wasser und einen Magneten zur Erzeugung von Magnetfeldern im durchfliessenden Wasser enthält.

## Beschreibung

Aus der EP-A-800 851 ist eine Vorrichtung zur Reinigung von Spannrahmen-Abluft gemäss Oberbegriff des Anspruchs 1 bekannt. Die Abluft wird dem Eintrittsende eines Kanals zugeführt, in welchem eine Wasser-Zerstäuberdüse angeordnet ist. Ans Austrittsende des Kanals ist ein Tropfenabscheider angeschlossen. In der Druckwasser-Zuleitung zur Düse kann ein physikalisches Wasserbehandlungsgerät angeordnet sein.

Im praktischen Einsatz dieser Vorrichtung wurde tatsächlich ein solches herkömmliches Wasserbehandlungsgerät eingesetzt. Allerdings hat sich herausgestellt, dass es kaum wirksam war. Der untere Teil des Kanals und der Tropfenabscheider mussten wegen starker Kalkablagerungen in kurzen Intervallen aufwendig gereinigt werden. Damit der Lamellen-Tropfenabscheider überhaupt zu reinigen war und nicht verstopfte, musste der Lamellenabstand relativ gross gewählt werden, so dass nur Tröpfchen von mehr als 20µm Durchmesser abgeschieden werden konnten.

Der vorliegenden Erfindung liegt die Aufgabe zugrunde, eine Vorrichtung der eingangs genannten Art derart zu verbessern, dass die obigen Nachteile beseitigt werden. Diese Aufgabe wird durch die kennzeichnenden Merkmale des Anspruchs 1 gelöst.

In Versuchen an einer bestehenden Vorrichtung, die bereits zwei Jahre in Betrieb war, wurde deren physikalisches Wasserbehandlungsgerät durch ein erfindungsgemässes Gerät ersetzt. Erstaunlicherweise wurde festgestellt, dass sich bereits bestehende Kalkablagerungen langsam auflösten und wieder das blanke Metall zum Vorschein kam. Es bildeten sich keine neue Ablagerungen. Weil die Lamellen des Tropfenabscheiders sauber blieben, konnten sie wesentlich enger gesetzt werden. Dadurch konnte der Abscheidungsgrad erheblich gesteigert und es konnten Tröpfchen bis hinunter zu einem Durchmesser von etwa 2,5µm ausgeschieden werden. Dies ist bedeutsam, weil gerade die Tröpfchen mit kleinem Durchmesser prozentual mehr Schadstoffe enthalten, vor allem auch Geruchsaktive. Ausserdem hat sich ergeben, dass die Vorbehandlung des Wassers mit dem erfindungsgemässen Gerät die Versprühbarkeit des Wassers erheblich verbessert. Offenbar senkt das Gerät die Oberflächenspannung des Wassers. Der Reinigungsgrad der Abluft konnte daher erheblich verbessert werden. Dadurch konnte auf ein teures und störanfälliges nachgeschaltetes Elektrofilter verzichtet werden. Die Reinigungsintervalle konnten erheblich verlängert und der Reinigungsaufwand reduziert werden, weil keine Kalkrückstände mehr hafteten, sondern Schmutz lediglich noch als Schlamm anfiel, der leicht abgespült werden konnte.

Nachfolgend werden Ausführungsbeispiele der Erfindung anhand der Zeichnung erläutert. Darin zeigt:
- Figur 1: ein Schema einer Abluftreinigungsanlage, und
- Figuren 2 und 3: zwei Ausführungsformen eines physikalischen Wasserbehandlungsgerätes.

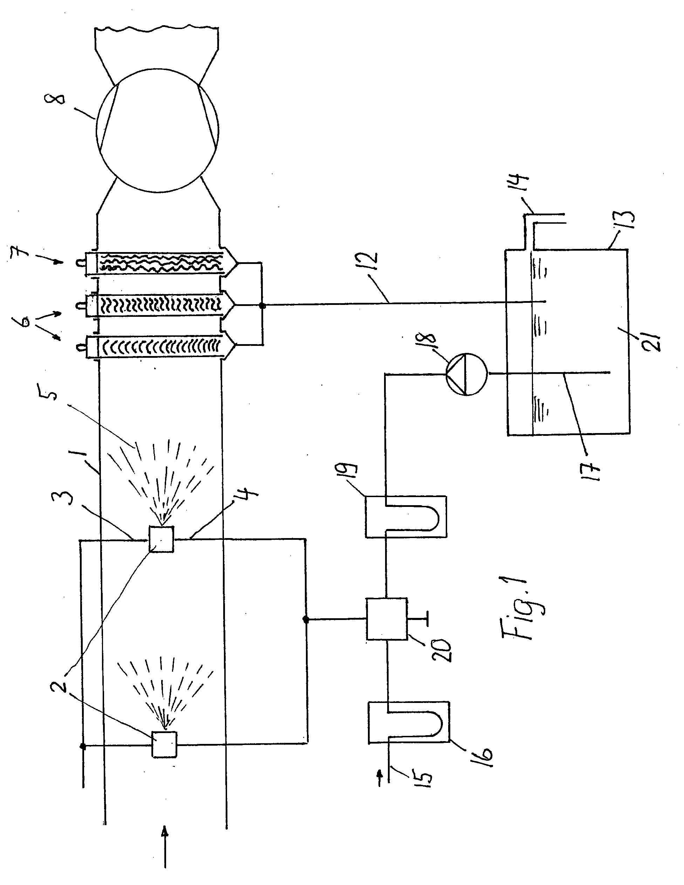

Die Anlage nach Figur 1 umfasst einen Kanal 1, welchem zu reinigende Abluft am Eintrittsende in Pfeilrichtung A zugeführt wird. Im Kanal 1 ist mindestens eine Zweistoff-Sprühdüse 2 angeordnet. Jede Düse 2 hat einen Druckluftanschluss 3 und einen Druckwasseranschluss 4. Eine geeignete Ausführungsform dieser Düsen 2 ist in der EP-A-800 851 beschrieben. Die Düsen 2 zerstäuben das zugeführte Wasser in einen feinen Nebel 5. Stromabwärts der Düsen 2 sind im Kanal 1 hintereinander mehrere Lamellen-Tropfenabscheiders 6 und ein nachgeschalteter Gewebeagglomerator-Tropfenabscheider 7 angeordnet. Der Lamellenabstand innerhalb des in Strömungsrichtung ersten Abscheiders 6 ist grösser und der Luftablenkungsgrad kleiner als im zweiten Abscheider 6 und jedem allenfalls nachgeschalteten Abscheider 6. Dadurch werden von Abscheider 6 zu Abscheider 6 immer feinere Wassertröpfchen abgeschieden. Die Abscheider 6, 7 sind als auswechselbare Schubladeneinheiten ausgebildet, damit sie ohne oder nur mit kurzfristiger Unterbrechung zur Reinigung gegen saubere Abscheider 6, 7 ausgetauscht werden können. Stromabwärts der Abscheider 6, 7 ist ein Gebläse 8 angeordnet, das die gereinigte Abluft in einen Kamin fördert. Das in den Abscheidern 6, 7 abgeschiedene, mit Schadstoff belastete Wasser wird über eine Leitung 12 in einen Sammelbehälter 13 geleitet. Der Behälter 13 hat einen Überlauf 14, der an die Kanalisation angeschlossen ist.

In der Frischwasserzuleitung 15 zu den Düsen 2 ist ein Gerät 16 zur physikalischen Wasserbehandlung angeordnet. Je nach Verschmutzungsgrad des Abwasser im Behälter 13 kann zusätzlich aus dessen unterem Teil mittels einer Saugleitung 17 und einer Pumpe 18 sowie allenfalls eines zweiten Gerätes 19 zur physikalischen Wasserbehandlung sowie eines einstellbaren Mischventils 20 ein Teil des Abwassers 21 rezykliert werden. Dies ist insbesondere möglich, wenn das Abwasser 21 als Schadstofflast mehrheitlich flüssige Bestandteile mit einem spezifischen Gewicht unter 1 enthält, die oben aufschwimmen und daher direkt in den Ablauf 14 gelangen. Durch diese Anordnung kann der Frischwasserverbrauch erheblich gesenkt werden.

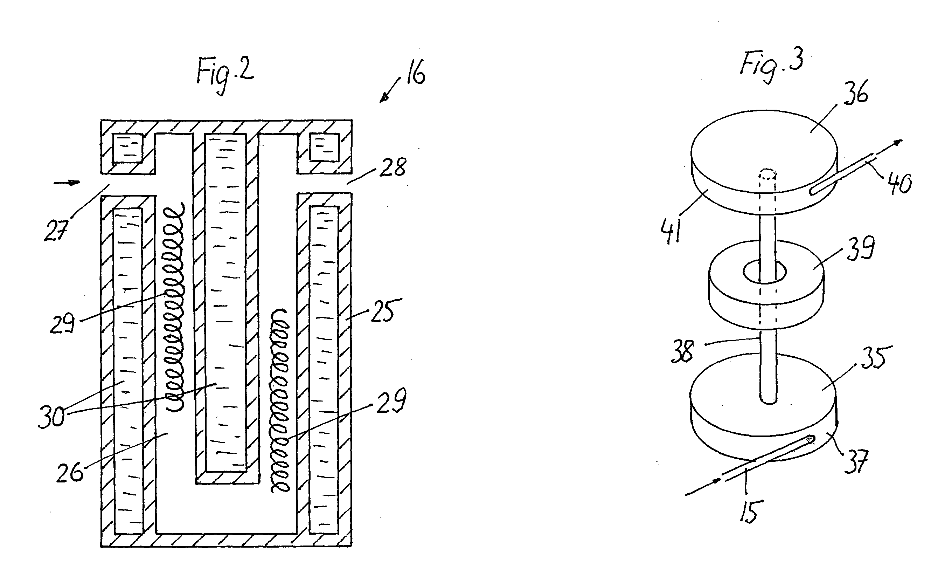

In Figur 2 ist eine bevorzugte Ausführungsform des Gerätes 16 schematisch dargestellt. Das Gerät 16 umfasst ein permanentmagnetisches Gehäuse 25, in welchem ein U-förmiger Strömungskanal 26 für das durchströmende Wasser mit einem Zufuhranschluss 27 und einem Abfuhranschluss 28 gebildet ist. Im Kanal 26 sind Wenden 29 zur intensiven Verwirbelung des strömenden Wassers eingebaut. Der Kanal 26 ist umgeben von abgeschlossenen Kammern 30, die ein Aktivierungsmedium vorzugsweise ein Grander-Konzentrat (siehe EP-A-497 754) enthalten, welches durch Resonanz mit dem durchströmenden Wasser wechselwirkt.

In Figur 3 ist eine andere Ausführungsform des Gerätes 16 schematisch dargestellt. Es enthält zwei kreiszylindrische Vortex-Kammern 35, 36. In die kreiszylindrische Wand 37 der Kammer 35 mündet tangential die Zuleitung 15 des Frischwassers. Die Abfuhrleitung 38 der Kammer 35 ist koaxial zur Kammer 35 an diese angeschlossen. Durch die Corioliskräfte in der Kammer 35 wird in der Leitung 38 ein extrem starker Wirbel gebildet. Die Leitung 38 ist umgeben von einem permanentmagnetischen Ringmagneten 39, der mit seinem Magnetfeld auf das in der Leitung 38 durchfliessende, verwirbelte Wasser einwirkt. Die Leitung 38 mündet zentral in die Kammer 36. Die Abflussleitung 40 ist an die zylindrische Wand 41 der Kammer 36 tangential angeschlossen. In der Kammer 36 wird daher der in der Kammer 35 gebildete Wirbel wieder aufgelöst.

Abweichend von der Ausführungsform nach Figur 3 kann die Verwirbelung des Wassers auch mit andern Mitteln, zum Beispiel durch spiralförmige Rohrwendeln, erzielt werden.

Als wesentlich für den Erfolg der erfindungsgemässen Vorrichtung hat sich beim physikalischen Wasserbehandlungsgerät die Kombination von Magnetfeldern und Verwirbelung des durchfliessenden Wassers erwiesen. Der zusätzliche Einsatz des Grander-Konzentrates zur Wasserbelebung ist dabei besonders vorteilhaft.

Die beschriebene Vorrichtung eignet sich nicht nur für Abluftreinigungsanlagen, sondern auch für Anlagen zur Reinigung von Synthese- und Prozessgas sowie Erdgas.

Die erfindungsgemässe Kombination von einem Wäscher für gasförmige Medien mit dem speziellen Gerät zur physikalischen Wasserbehandlung wurde vorstehend im Zusammenhang mit einem Abluft-Reinigungsgerät gemäss der EP-A-800 851 beschrieben. Die erfindungsgemässe Kombination eignet sich jedoch auch im Zusammenhang mit andern Typen von Wäschern, zum Beispiel Wirbelwäschern, oder Venturiwäschern. Diese werden vor allem eingesetzt, um wasserlösliche Schadstoffe aus dem zu reinigenden Gas auszuscheiden. Auch bei solchen Wäschern ist der Einsatz des speziellen Gerätes gemäss Kennzeichen der Ansprüche 1 und 2 sehr wirksam, weil die Löslichkeit der Schadstoffe im Wasser, also der Wascheffekt verbessert wird, weil im nachgeschalteten Tropfenabscheider wesentlich feinere Tröpfchen abgeschieden werden können als bei unbehandeltem Wasser und weil der Reinigungsaufwand reduziert wird.

## Patentansprüche

1. Vorrichtung zum Reinigen gasförmiger Medien in einem Wäscher, der einen ersten Anschluss (4) zum Zuführen von Wasser enthält, einen zweiten Anschluss zum Zuführen des zu reinigenden Mediums, einen am Austrittsende des Wäschers angeordneten Tropfenabscheider (6, 7), sowie ein in der Wasser-Zuleitung (15) angeordnetes, physikalisches Wasserbehandlungsgerät (16), **dadurch gekennzeichnet, dass** das Wasserbehandlungsgerät (16) mindestens eine Einrichtung (29, 35) zur Erzeugung von Wirbeln im durchfliessenden Wasser und einen Magneten (25, 39) zur Erzeugung von Magnetfeldern im durchfliessenden Wasser enthält.

2. Vorrichtung nach Anspruch 1, wobei das Wasserbehandlungsgerät (16) zusätzlich abgeschlossene Kammern (30) enthaltend ein aktiviertes Medium enthält, dass mit dem durchfliessenden Wasser wechselwirkt.

3. Vorrichtung nach Anspruch 1 oder 2, wobei der Tropfenabscheider (6, 7) derart ausgebildet ist, dass er Wassertröpfchen bis unter 10µm abscheidet.

4. Vorrichtung nach einem der Ansprüche 1-3, wobei der Tropfenabscheider (6, 7) mehrere in Serie geschaltete Lamellen-Abscheider (6) umfasst.

5. Vorrichtung nach Anspruch 4, wobei der Lamellenabstand im ersten Abscheider (6) grösser ist als jener in den in Strömungsrichtung nachfolgenden Abscheidern (6).

6. Vorrichtung nach der Anspruch 4 oder 5, wobei den Lamellenabscheidern (6) ein Gewebeagglomerator-Abscheider (7) nachgeschaltet ist.

7. Vorrichtung nach einem der Ansprüche 4-6, wobei die Abscheider (6, 7) als austauschbare Schubladenelemente ausgebildet sind.

8. Vorrichtung nach einem der Ansprüche 1-7, wobei sie einen Auffangbehälter (13) für das in den Abscheidern (6, 7) abgeschiedene Wasser hat und zusätzlich eine Pumpe (18), um über ein einstellbares Mischventil (20) dem Frischwasser rezykliertes Wasser (21) zuzumischen.

9. Vorrichtung nach Anspruch 8, wobei in der Leitung (17) für das rezyklierte Wasser (21) ein weiteres Gerät (19) gemäss Kennzeichen der Ansprüche 1 oder 2 eingesetzt ist.
